Europäisches Patentamt

European Patent Office

Office européen des brevets

(11) Veröffentlichungsnummer: **0 360 320**

**A1**

# (12) EUROPÄISCHE PATENTANMELDUNG

(21) Anmeldenummer: **89202223.7**

(22) Anmeldetag: **04.09.89**

(51) Int. Cl.5: **F16L 55/00 , F16K 5/20**

(30) Priorität: **07.09.88 DE 3830367**

(43) Veröffentlichungstag der Anmeldung:
**28.03.90 Patentblatt 90/13**

(84) Benannte Vertragsstaaten:
**DE FR GB**

(71) Anmelder: **METALLGESELLSCHAFT AG**
**Reuterweg 14 Postfach 3724**
**D-6000 Frankfurt/M.1(DE)**

Anmelder: **Deutsche Gesellschaft für**
**Wiederaufarbeitung von Kernbrennstoffen**
**mbH**
**Hamburger Allee 4 Postfach 1407**
**D-3000 Hannover 1(DE)**

Anmelder: **XOMOX INTERNATIONAL GMBH &**
**CO.**
**Von-Behring-Strasse 15**
**D-8990 Lindau(DE)**

(72) Erfinder: **Schwiedergoll, Erhard**
**Hanauer Strasse 11**
**D-6054 Rodgau 3(DE)**
Erfinder: **Hannig, Rainer**
**Wiesenstrasse 88**
**D-6057 Dietzenbach(DE)**
Erfinder: **Gonsior, Wolfgang**
**Im Obstgarten 10**
**D-8990 Lindau-Bodolz(DE)**

(74) Vertreter: **Rieger, Harald, Dr.**
**Reuterweg 14**
**D-6000 Frankfurt a.M.(DE)**

(54) **Einrichtung zur Fernmontage eines Einbauteils.**

(57) Zur lösbaren Befestigung eines auswechselbaren Einbauteils (7) in einer im wesentlichen horizontalen, ortsfesten Rohrleitung (1) wird eine fernbedienbare Einrichtung vorgeschlagen, die im wesentlichen aus einem biegesteifen Rohrgehäuse (2) und einem Einbauteil (7) besteht, die über korrespondierende obere, im wesentlichen horizontale Flansche (6)(11) miteinander fest verbindbar sind. Das Rohrgehäuse (2) besitzt eine sich über den gesamten Rohrquerschnitt erstreckende Montageöffnung (3), die durch zwei einander gegenüberliegende, von oben nach unten keilförmig aufeinander zulaufende Ebenen (4)(5) begrenzt ist. Das Einbauteil (7) besitzt ein keilförmig ausgebildetes Gehäuse (8), dessen Begrenzungsebenen (9)(10) auf die Montageöffnung (3) abgestimmt sind. Die Einrichtung ist bei der Montage selbstzentrierend und muß wegen der Anordnung der Verbindungsflansche (6)(11) nur von oben zugänglich sein.

Fig. 2

11

7

10    8    9

13    A

A

15

13    14

6    5    4

1    2    1

3

Fig. 1

1a

## Einrichtung zur Fernmontage eines Einbauteils

Die Erfindung bezieht sich auf eine fernbedienbare Einrichtung zur lösbaren Befestigung eines auswechselbaren Einbauteils in einer im wesentlichen horizontalen, ortsfesten Rohrleitung.

Derartige Einrichtungen werden benötigt, um in heißen Zellen von beispielsweise Kernkraftwerken, Wiederaufarbeitungsanlagen oder dergl., die nicht betreten werden dürfen, Verschleißteile austauschen zu können. Das Trennen und Verbinden erfolgt dabei mittels ferngesteuerter Manipulatoren, deren Bewegungen vom Monteur mit Fernsehkameras überwacht werden. Wegen der Vielzahl der räumlich unterschiedlich angeordneten Verbindungsstellen muß man einerseits flexibel einsetzbare fernbedienbare Werkzeuge vorsehen, kann aus wirtschaftlichen Gründen andererseits aber nur einfache Greif-, Dreh- und Transportbewegungen realisieren. Dementsprechend müssen die fernbedienbaren Einrichtungen möglichst einfach und in bestimmter Weise zugänglich ausgebildet werden.

Hinzu kommt, daß für die Montage im allgemeinen nur ein sehr begrenzter Raum zur Verfügung steht und daß in ihren Bewegungen sehr präzise Roboter aus verschiedenen Gründen nicht einsetzbar sind. Für die Gestaltung der Einrichtungen wird deswegen davon ausgegangen, daß zur Montage zumindest ein in eine fernsteuerbare Transporteinrichtung einsetzbares schwenk- und drehbares Greifwerkzeug sowie ein Drehantrieb zum Rechts-Links-Drehen eines Schraubbolzens zur Verfügung steht.

Bisher sind nur wenige Einrichtungen der eingangs genannten Art bekannt geworden, ohne daß sie sich in der Praxis schon bewährt hätten.

Die in der EP-A-0 208 969 beschriebene, fernbedienbare Flanschverbindung für Rohre hat sich vermutlich deswegen nicht durchsetzen können, weil sie für eine Flanschverbindung vier getrennte Schraubvorgänge erfordert, was als zu zeitraubend angesehen wird, und weil sie bis zur Selbstjustierung in der Montagestellung eine sehr genaue Vorzentrierung erfordert, die mit den verfügbaren Greifwerkzeugen kaum zu erreichen ist.

Das gilt auch für die fernbedienbare Spannvorrichtung gemäß DE-OS 33 34 074, bei der die Flansche mittels radial auf- und zufahrbarer Spannglieder axial gegeneinander bewegbar sind. Bei der Vorzentrierung muß die an einem Flansch befestigte Spanneinrichtung mit nur geringem Spiel über den anderen Flansch geschoben werden, was als zu schwierig und bei der Ausführung als zu zeitaufwendig angesehen wird.

Die DE-OS 33 40 465 bezieht sich auf eine Rohrverbindungseinrichtung mit einem Rohrleitungsteil zum Verbinden von zwei in größerem Abstand voneinander angebrachten ortsfesten Endflanschen zweier Rohrleitungen. Vorgesehen ist, daß die Trennebene der beiden Flanschverbindungen in zueinander parallel Ebenen liegen, damit die notwendigen Transport- und Drehbewegungen mit im wesentlichen gleicher Ausrichtung der Werkzeuge vorgenommen werden können. Diese Forderung ist im allgemeinen ohne besondere Schwierigkeiten zu erfüllen. Die Flanschverbindung selbst ist - abgesehen von einer Vorzentrierhilfe - konventionell mit mehreren Durchgangsschrauben mit Muttern für jeden Flansch ausgeführt und in dieser Form für den vorgesehenen Anwendungszweck nicht brauchbar, weil es mit vertretbarem Aufwand nicht möglich ist, solche normalen Schraubverbindungen mit den in heißen Zellen vorhandenen Werkzeugen herzustellen.

Da es bisher keine brauchbaren Einrichtungen der eingangs genannten Art gibt, besteht die Aufgabe, solche unter Beachtung der genannten "Randbedingungen" zu entwickeln, wobei insbesondere auf eine einfache Vorzentrierung, eine zeitsparende Montage und eine robuste und betriebssichere Ausführung zu achten ist.

Zur Lösung dieser Aufgabe wird eine gattungsbildende Einrichtung vorgeschlagen, die gekennzeichnet ist durch

a) ein fest mit der Rohrleitung verbundenes biegesteifes Rohrgehäuse mit einer sich über den gesamten Rohrquerschnitt erstreckenden Montageöffnung, die durch zwei einander gegenüberliegende, von oben nach unten keilförmig aufeinander zulaufende Ebenen begrenzt ist, sowie mit einem im wesentlichen horizontalen oberen Festflansch,

b) ein Einbauteil mit keilförmig ausgebildetem Gehäuse, dessen Begrenzungsebenen auf die Montageöffnung abgestimmt sind und das einen mit dem Festflansch des Rohrgehäuses korrespondierenden Montageflansch aufweist sowie durch

c) an sich bekannte, fernbedienbare Befestigungsmittel zur Verbindung des Einbauteils mit dem Rohrgehäuse.

Vorteilhafte Weiterbildungen und Anwendungsmöglichkeiten des Erfindungsgedankens sind aus den Unteransprüchen 2 bis 10 ersichtlich.

Die erfindungsgemäße Einrichtung ist infolge der keilförmig ausgebildeten Montageöffnung selbstzentrierend und deswegen ohne großen Zeitaufwand leicht montierbar. Weitere Einzelheiten werden anhand des in den Fig. 1 bis 5 dargestellten Ausführungsbeispiels näher erläutert:

Fig. 1 zeigt einen Teilschnitt durch ein Rohrgehäuse,

Fig. 2 zeigt eine Seitenansicht eines Einbauteils,

Fig. 3 zeigt einen Teil des Einbauteils mit Führungsschienen,

Fig. 4 zeigt einen Teil des Rohrgehäuses mit Führungsbolzen,

Fig. 5 zeigt eine Draufsicht auf den Montageflansch.

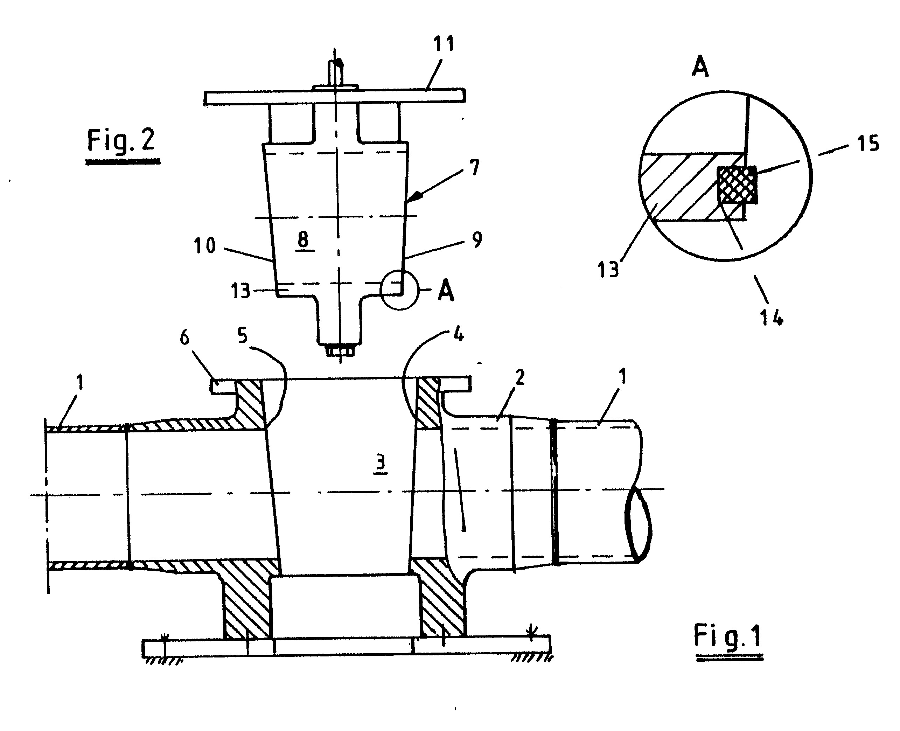

In Fig. 1 ist ein biegesteifes Rohrgehäuse (2) dargestellt, das durch Schweißen mit einer Rohrleitung (1) und in nicht näher dargestellter Weise mit dem Untergrund ortsfest verbunden ist. Das Rohrgehäuse (2) besitzt eine Montageöffnung (3), die durch zwei einander gegenüberliegende, von oben nach unten keilförmig aufeinander zulaufende Ebenen (4) und (5) begrenzt ist. Außerdem ist das Rohrgehäuse (2) mit einem im wesentlichen horizontalen oberen Festflansch (6) versehen.

Das Einbauteil (7), beispielsweise eine Absperrklappe, weist ein keilförmig ausgebildetes Gehäuse (8) auf, dessen Begrenzungsebenen (9) und (10) auf die Montageöffnung (3) des Rohrgehäuses (2) abgestimmt sind. Das Einbauteil (7) besitzt außerdem einen Montageflansch (11), mit dem es in nicht näher dargestellter Weise mittels an sich bekannter, fernbedienbarer Befestigungsmittel mit dem Flansch (6) des Rohrgehäuses (2) verbunden werden kann. Aus der vergrößerten Darstellung A ist ersichtlich, daß die Rohrwandung (13) des Einbauteils (7) einen Rezeß (14) und eine darin eingelegte ringförmige Dichtung (15) aufweist.

Das Einbauteil (7) kann unter den eingangs genannten Bedingungen in sehr einfacher Weise montiert werden, weil es infolge der schräggestellten Begrenzungsflächen (9) und (10) in der entsprechend ausgebildeten Montageöffnung (3) selbstzentrierend ist und weil der für eine dichte Verbindung erforderliche Anpreßdruck durch bekannte fernbedienbare Befestigungsmittel aufgebracht werden kann, die eine Zugänglichkeit nur von oben erfordern. Zur Zentrierung senkrecht zur Darstellungsebene können im Rohrgehäuse (2) und am Einbauteil (3) in ähnlicher Weise keilförmig angeordnete Führungsleisten vorgesehen werden, wobei jedoch darauf geachtet werden muß, daß der gegenseitige Abstand zwischen Rohrgehäuse (2) und Einbauteil (7) in diesen Bereichen stets etwas größer ist als zwischen den Begrenzungsebenen (4), (5) und (9), (10), damit der Anpreßdruck voll auf letztere übertragen werden kann.

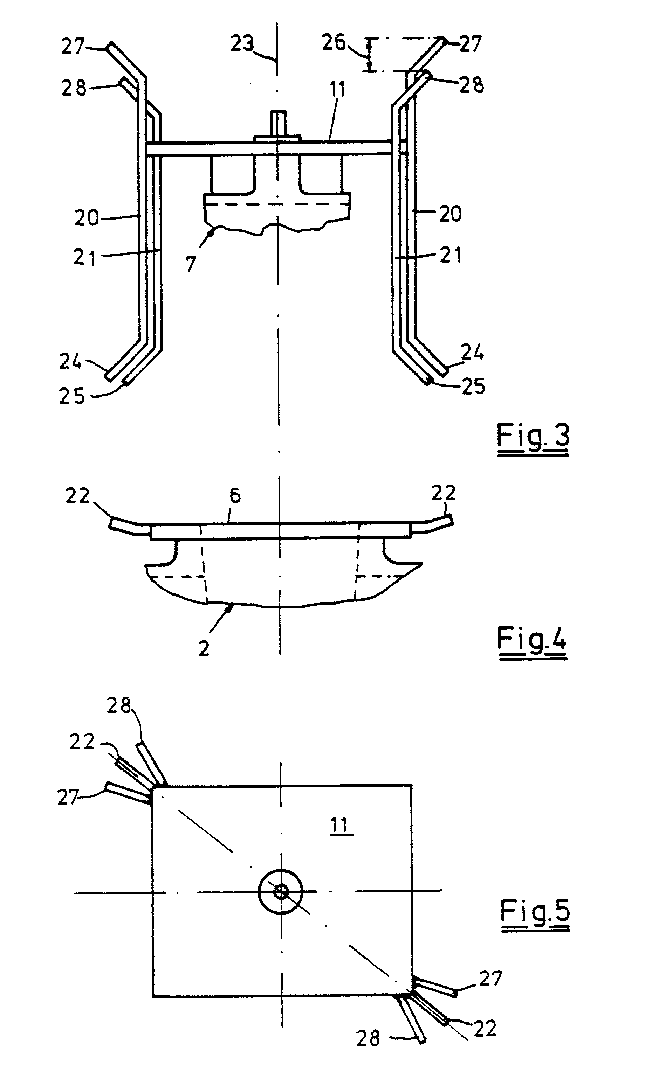

Bei Bedarf kann die erfindungsgemäße Vorrichtung jedoch auch mit Bauteilen zur Vorzentrierung ausgerüstet werden, wie dies in den Fig. 3 bis 5 dargestellt ist. Dazu sind am Festflansch (6) des Rohrgehäuses (2) Führungsbolzen (22) und am Montageflansch (11) des Einbauteils (7) im wesentliche parallel zur Hochachse (23) verlaufende Führungsschienen (20,21) angebracht. Die unteren Enden (24,25) der Führungsschienen (20,21) sind nach außen abgewinkelt und bilden so einen trichterförmigen Einlaufbereich für die Führungsbolzen (22). Für die Montage eines weiteren Bauteils auf dem Einbauteil (7), beispielsweise eines Antriebs, sind die Führungsschienen (20,21) nach oben verlängert und ihre oberen Enden (27,28) ebenfalls nach außen abgewinkelt. Die Führungsschienen sind außerdem um den Abstand (26) in der Höhe versetzt angeordnet, um die Vorjustierung durch Absenken und Drehen zu erleichtern, wobei die Führungsbolzen (22) als Anschlag dienen.

Es versteht sich von selbst, daß die Bauteile zur Vorjustierung auch vertauscht angeordnet werden können, d.h., daß die Führungsschienen am Festflansch (6) des Rohrgehäuses (2) und die Führungsbolzen am Montageflansch (11) des Einbauteils (7) angebracht sind. Durch die Maßnahmen zur Vorzentrierung wird verhindert, daß in schwierigen Montagefällen die Begrenzungsflächen der Montageöffnung (3) oder des keilförmig ausgebildeten Gehäuses (8) und insbesondere die darin eingelegten ringförmigen Dichtungen (15) beschädigt werden.

## Ansprüche

1. Fernbedienbare Einrichtung zur lösbaren Befestigung eines auswechselbaren Einbauteils in einer im wesentlichen horizontalen, ortsfesten Rohrleitung, gekennzeichnet durch

a) ein fest mit der Rohrleitung (1) verbundenes biegesteifes Rohrgehäuse (2) mit einer sich über den gesamten Rohrquerschnitt erstreckenden Montageöffnung (3), die durch zwei einander gegenüberliegende, von oben nach unten keilförmig aufeinander zulaufende Ebenen (4,5) begrenzt ist, sowie mit einem im wesentlichen horizontalen oberen Festflansch (6),

b) ein Einbauteil (7) mit keilförmig ausgebildetem Gehäuse (8), dessen Begrenzungsebenen (9,10) auf die Montageöffnung (3) abgestimmt sind und das einen mit dem Festflansch (6) des Rohrgehäuses (2) korrespondierenden Montageflansch (11) aufweist sowie durch

c) an sich bekannte, fernbedienbare Befestigungsmittel zur Verbindung des Einbauteils (7) mit dem Rohrgehäuse (2).

2. Einrichtung nach Anspruch 1, dadurch gekennzeichnet, daß die Rohrwandung (13) des Einbauteils (7) Rezesse (14) und darin eingelegte ringförmige Dichtungen (15) aufweist.

3. Einrichtung nach Anspruch 1 oder 2, dadurch gekennzeichnet, daß der Montageflansch (11) des Einbauteils (7) mittels Spannklauen mit dem Festflansch (6) des Rohrgehäuses (2) verbunden ist.

4. Einrichtung nach einem der Ansprüche 1 bis 3, dadurch gekennzeichnet, daß das Einbauteil eine Absperrklappe ist.

5. Einrichtung nach einem der Ansprüche 1 bis 3, dadurch gekennzeichnet, daß das Einbauteil ein Filter ist.

6. Einrichtung nach einem der Ansprüche 1 bis 3, dadurch gekennzeichnet, daß das Einbauteil ein Durchfluß-Regelorgan ist.

7. Einrichtung nach einem der Ansprüche 1 bis 6, dadurch gekennzeichnet, daß das Einbauteil (7) mit im wesentlichen parallel zur Hochachse (23) verlaufenden Führungsschienen (20,21) versehen ist, deren untere Enden (24,25) nach außen abgewinkelt sind und daß am Rohrgehäuse (2) mit den Führungsschienen (20,21) korrespondierende Führungsbolzen (22) angebracht sind.

8. Einrichtung nach Anspruch 7, dadurch gekennzeichnet, daß die Führungsbolzen (22) an diagonal einander gegenüberliegenden Ecken des Festflansches (6) des Rohrgehäuses (2) und die Führungsschienen (20,21) unmittelbar neben den zugehörigen Ecken des Montageflansches (11) des Einbauteils (7) angebracht sind.

9. Einrichtung nach Anspruch 7 oder 8, dadurch gekennzeichnet, daß die Führungsschienen (20,21) nach oben verlängert ausgebildet sind und daß auch ihre oberen Enden (27,28) nach außen abgewinkelt sind.

10. Einrichtung nach einem der Ansprüche 7 bis 9, dadurch gekennzeichnet, daß die Führungsschienen (20,21) im Abstand (26) in der Höhe versetzt zueinander angebracht sind.

Fig.2

11

7

10    8    9

13        A

A

15

13

14

6    5    4

1        2    1

3

Fig.1

EP 0 360 320 A1

_Fig. 3_

_Fig. 4_

_Fig. 5_

# Europäisches Patentamt

# EUROPÄISCHER RECHERCHENBERICHT

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | FR-A-1 457 640 (C.E.A.)<br>* Figur; Seite 1, linke Spalte, Zeile 19 - Seite 2, linke Spalte, Zeile 31 *<br>--- | 1-2 | F 16 L 55/00<br>F 16 K 5/20 |
| A | EP-A-0 133 755 (CROSBY VALVE & GAGE CO.)<br>* Figur 1; Seite 2, Zeile 21 - Seite 5, Zeile 17 *<br>--- | 1-2,6 | |
| A | US-A-3 096 999 (AHLSTONE et al.)<br>* Figuren *<br>--- | 3 | |
| A,D | DE-A-3 340 465 (FORSTER)<br>* Figur 4; Seite 13, Zeilen 16-21 *<br>----- | 7 | |

**RECHERCHIERTE SACHGEBIETE (Int. Cl.5)**

F 16 L
F 16 K
G 21 C
G 21 F
G 01 F

Der vorliegende Recherchenbericht wurde für alle Patentansprüche erstellt

| Recherchenort | Abschlußdatum der Recherche | Prüfer |
|---|---|---|
| DEN HAAG | 04-12-1989 | NARMINIO A. |